# EUROPÄISCHE PATENTANMELDUNG

(11) **EP 4 614 133 A1**
(43) Veröffentlichungstag der Anmeldung: **10.09.2025**
(21) Anmeldenummer: 25154928.3
(22) Anmeldetag: 30.01.2025
(51) Int. Cl.: G01N 21/27, G02B 1/18, G02B 5/02, G01N 21/3563, G01N 21/359, A01B 79/00, A01D 41/127

(54) **OPTISCHER REFERENZSTANDARD**

(30) Priorität: 04.03.2024 DE 102024106178
(71) Anmelder: CLAAS Selbstfahrende Erntemaschinen GmbH, 33428 Harsewinkel (DE)
(72) Erfinder: Schulenburg, Robert, 44319 Dortmund (DE); Marbach, Ralf, 33775 Versmold (DE)
(74) Vertreter: Budach, Steffen

(57) **Zusammenfassung**

Die Erfindung betrifft einen optischen Referenzstandard (2) umfassend zumindest eine erste Schicht (3), die PTFE (7) enthält, wobei der optische Referenzstandard (2) eine zweite Schicht (4) umfasst, die ein PTFE-Derivat (9) enthält und zumindest abschnittsweise die erste Schicht (3) bedeckt.

## Beschreibung

Die Erfindung betrifft einen optischen Referenzstandard gemäß dem Oberbegriff des Anspruchs 1, ein Verfahren zur Herstellung eines optischen Referenzstandards gemäß dem Oberbegriff des Anspruchs 6 und die Verwendung eines optischen Referenzstandards gemäß dem Oberbegriff des Anspruchs 12.

Aus der DE 10 2006 035 906 A1 ist eine als Feldhäcksler ausgebildete selbstfahrende Erntemaschine mit einer Messvorrichtung zur Erfassung eines Inhaltsstoffes eines mit der Messvorrichtung untersuchten Materials bekannt geworden. Zur Erfassung des Inhaltsstoffes verwendet die Messvorrichtung die Nahinfrarot (NIR) Spektroskopie. Hierbei wird das zu untersuchende Material vom Messlicht bestrahlt und reflektiert. Die reflektierte Strahlung enthält Informationen über die Probenabsorption und damit auch über die Inhaltsstoffkonzentration des Materials.

Derartige Messvorrichtungen benötigen zusätzlich eine sogenannte spektroskopische Referenzmessung, um die optischen Eigenschaften der Messvorrichtung zu ermitteln, sodass die optischen Eigenschaften der Messvorrichtung bei der Analyse der von der Probe reflektierten Strahlung berücksichtigt werden können.

Die DE 10 2006 035 906 A1 beschreibt deshalb, dass zusätzlich zu der Probe ein als Weißstandard ausgebildeter optischer Referenzstandard bestrahlt wird, um so das Reflexionsverhalten der Messvorrichtung zu ermitteln. Alternativ ist es auch bekannt, dass Anstelle des zu untersuchenden Materials der optische Referenzstandard bestrahlt wird. Hierbei muss ein Weißstandard hohen optischen Anforderungen genügen. Zum einen sollte das Reflexionsverhalten des Referenzstandards eine besonders hohe Langzeitstabilität aufweisen. Auch sollte die Reflektivität des Referenzstandards im Wesentlichen nicht von der Wellenlänge abhängen. Für einen sogenannten Weißstandard gilt zusätzlich, dass dieser besonders hohe Reflexionswerte von zumindest annähernd 100% aufweisen sollte. Aufgrund seiner optischen Eigenschaften hat sich gesintertes PTFE, auch bekannt als Teflon, als besonders geeignet zur Verwendung als Weißstandard erwiesen.

PTFE-Standards haben jedoch den Nachteil, dass diese ein hohes Risiko für Verschmutzungen aufweisen. PTFE-Standards sind zwar äußerst hydrophob, absorbieren jedoch unpolare Stoffe, wie beispielsweise Fette und Öle, in ihren mikroskopisch kleinen Luftlöchern. Dies ist besonders nachteilig bei dem Einsatz von PTFE-Standards in der Landtechnik, insbesondere bei selbstfahrenden Erntemaschinen, da beim Ernteprozess eine besonders staubige und verschmutzungsfördernde Umgebung entsteht.

Es ist deshalb Aufgabe der Erfindung, die beschriebenen Nachteile des Standes der Technik zu vermeiden und insbesondere einen optischen Referenzstandard zu schaffen, der den optischen Anforderungen genügt und eine verschmutzungsresistente Oberfläche aufweist.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein optischer Referenzstandard vorgeschlagen, zumindest eine erste Schicht umfassend, die PTFE enthält, wobei der optische Referenzstandard eine zweite Schicht umfasst, die ein PTFE-Derivat enthält und zumindest abschnittsweise die erste Schicht bedeckt.

Die Erfindung hat viele Vorteile. PTFE hat besonders vorteilhafte optische Eigenschaften um als optischer Referenzstandard, insbesondere um zum Kalibrieren optischer Messvorrichtungen, verwendet zu werden. Das Beschichten von PTFE mit einem PTFE-Derivat ermöglicht zusätzlich die erste Schicht vor äußeren Einflüssen zu schützen. Hierdurch wird ein optischer Referenzstandard mit einer PTFE-Schicht geschaffen, der eine verbesserte Oberfläche aufweist. Die Oberfläche wird durch das PTFE-Derivat undurchdringlich für Öl und Fett sowie abwischbar. Auch lässt sich die Oberfläche des Referenzstandards visuell besser auf Beschädigungen inspizieren.

Eine vorteilhafte Ausgestaltung sieht vor, dass die erste Schicht aus PTFE, insbesondere Polytetrafluorethylen, besteht und das PTFE-Derivat als FEP, insbesondere Tetrafluorethylen-Hexafluorpropylen-Copolymer, ausgebildet ist und die zweite Schicht aus FEP besteht. Dadurch, dass die erste Schicht zu 100 Gewichts-% aus PTFE und die zweite Schicht zu 100 Gewichts-% aus FEP besteht, erreicht der Referenzstandard hervorragende optische Eigenschaften. Weiterhin befindet sich der Schmelzpunkt von FEP unterhalb des Schmelzpunkt von PTFE, sodass sich die Materialen besonders gut miteinander verschweißen lassen.

Eine weitere vorteilhafte Ausgestaltung sieht vor, dass das PTFE als gesintertes PTFE ausgebildet ist. Eine hohe Anzahl mikroskopisch kleiner Luftlöcher bewirkt, dass das gesinterte PTFE einfallendes Licht diffus reflektiert, wobei die Reflektivität über breite Spektralbereich, insbesondere im Nahinfrarot-Bereich, nahezu 100% beträgt. Mithin ist gesintertes PTFE besonders als optischer Referenzstandard geeignet. In einer alternativen Ausgestaltung kann das PTFE aber auch als expandiertes Teflon, welches auch als ePTFE bezeichnet wird, ausgebildet sein.

Um ein Durchscheinen des Lichts durch die erste Schicht zu vermeiden, ist es besonders vorteilhaft, wenn die erste Schicht eine Schichtdicke von mindestens 2 mm aufweist, vorzugsweise eine Schichtdicke im Bereich von 4 mm bis 6 mm aufweist.

Weiterhin ist es besonders vorteilhaft, wenn die zweite Schicht eine Schichtdicke im Bereich von mindestens 10 µm bis maximal 100 µm, vorzugsweise eine Schichtdicke im Bereich von 40 µm bis 60 µm, aufweist. Wenn die zweite Schichte eine Schichtdicke von mindestens 10 µm aufweist, schützt die zweite Schicht die erste Schicht wirksam gegenüber mechanischen Einflüssen. Das Überschreiten einer Schichtdicke von 100 µm wirkt sich jedoch negativ auf die Transparenz der zweiten Schicht und somit negativ auf die optischen Eigenschaften des Referenzstandards aus, da die zweite Schicht lediglich als Schutzschicht dient. Mithin sollte die zweite Schicht einem maximale Schichtdicke von 100 µm nicht überschreiten.

Gemäß Anspruch 6 wird ein Verfahren zur Herstellung eines optischen Referenzstandards vorgeschlagen, welcher zumindest eine erste Schicht umfasst, die PTFE enthält, wobei eine zweite Schicht auf die erste Schicht aufgebracht wird, die ein PTFE-Derivat enthält.

Gemäß einer vorteilhaften Ausgestaltung ist der optische Referenzstandard gemäß einem der Ansprüche 1 bis 5 ausgebildet.

Vorzugsweise werden in einem ersten Schritt die erste und zweite Schicht aufeinandergeschichtet und mit Druck beaufschlagt, um die Ausbildung von Blasen während des Fügeprozesses der beiden Schichten zu vermeiden. Vorzugsweise wird in einem zweiten Schritt die erste Schicht mittels eines Heizelements, vorzugsweise unmittelbar erhitzt. Hierbei werden die beiden Schichten erwärmt, wobei sich die Schichten miteinander verbinden, bzw. miteinander verschweißt werden. Der Anpressdruckt bewirkt zusätzlich, dass sich die zweite Schicht, insbesondere das FEP, in den Poren der ersten Schicht festsetzt.

In einer alternativen Ausführungsform kann in einem ersten Schritt die erste oder die zweite Schicht erhitzt werden, wobei vorzugsweise die erste oder die zweite Schicht mittels eines Ofens erhitzt wird, wobei im zweiten Schritt die Schichten aufeinandergeschichtet und mit Druck beaufschlagt werden.

Besonders bevorzugt ist es, wenn die erste oder die zweite Schicht auf eine Temperatur erhitzt wird, die mindestens der Schmelztemperatur von dem PTFE-Derivat entspricht und geringer als die Schmelztemperatur von PTFE ist. Hierdurch erreicht das PTFE-Derivat einen viskosen Zustand, wobei sich das PTFE-Derivat in die Poren der ersten Schicht legt. Die Druckbeaufschlagung bewirkt hierbei zusätzlich, dass sich das PTFE-Derivat in den Poren des PTFEs festsetzt.

Vorzugsweise können in einem dritten Schritt die unter Druck stehenden Schichten abgekühlt werden. Beim Abkühlen der zweiten Schicht nimmt dessen Dichte zu und hält physikalisch in den Poren der ersten Schicht fest.

Gemäß dem Anspruch 12 wird die Verwendung eines optischen Referenzstandards in einer Messvorrichtung einer selbstfahrenden Erntemaschine vorgeschlagen, wobei der optische Referenzstandard gemäß einem der Ansprüche 1 bis 5 ausgebildet ist. Ein derartig ausgebildeter Referenzstandard ist besonders vorteilhaft zur Verwendung in einer Messvorrichtung einer selbstfahrenden Erntemaschine geeignet, zumal dieser eine besonders robuste und schmutzresistente Oberfläche aufweist und somit trotz der widrigen Umgebungsbedingungen bei einem Ernteprozess besonders langlebig und zuverlässig verwendbar ist.

Die vorliegende Erfindung wird nachstehend anhand eines in den Zeichnungen dargestellten Ausführungsbeispiels näher erläutert.
- Figur 1: schematisch einen optischen Referenzstandard;
- Figur 2: schematisch eine erste Variante eines Herstellungsverfahrens eines Referenzstandards gemäß Fig. 1;
- Figur 3: schematisch eine zweite Variante eines Herstellungsverfahrens eines Referenzstandards gemäß Fig. 1;
- Figur 4: schematisch eine dritte Variante eines Herstellungsverfahrens eines Referenzstandards gemäß Fig. 1;

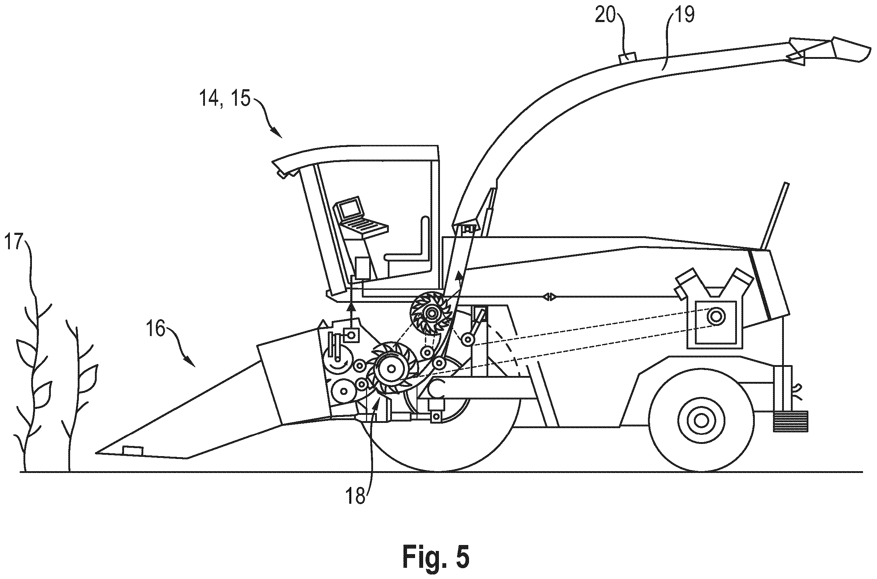

- Figur 5: schematisch einen Feldhäcksler in einer Seitenansicht mit einer Messvorrichtung.

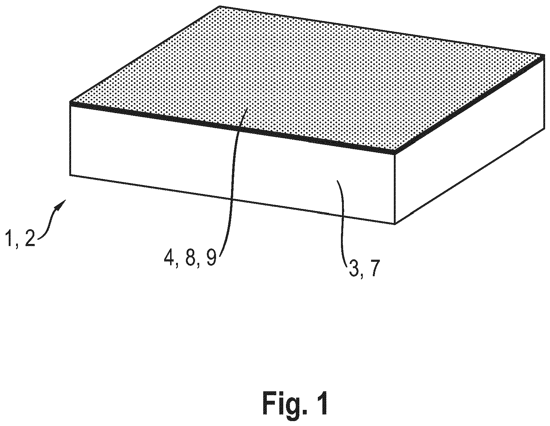

In Figur 1 ist ein als Weißstandard 1 ausgeführter optischer Referenzstandard 2 dargestellt. Der optische Referenzstandard besteht aus einer ersten Schicht 3 und einer zweiten Schicht 4. Eine Hauptfläche der ersten Schicht 3 ist flächig von der zweiten Schicht 4 bedeckt. Die erste Schicht 3 besteht aus PTFE 7, welches aufgrund seiner optischen Eigenschaften ein besonders bevorzugtes Material zur Verwendung als Weißstandard 1 ist. PTFE 7, welches das Kurzzeichen für Polytetrafluorethylen ist, weist eine besonders hohe Langzeitstabilität seiner Reflexionseigenschaften auf. Weiterhin ist die Reflektivität von PTFE 7 im Wesentlichen unabhängig von der Wellenlänge des reflektierten Lichts. Auch weist PTFE 7 besonders hohe Reflexionswerte von nahezu 100 % auf, weshalb dieses Material besonders geeignet als Weißstandard 1 ist. Hier und vorzugsweise besteht die erste Schicht 3 aus gesinterten PTFE 7. Gesintertes PTFE 7 weist eine hohe Anzahl mikroskopisch kleiner Löcher auf und erreicht eine Reflektivität von über 98 % über breite Spektralbereiche, insbesondere im Nahinfrarotbereich.

Die zweite Schicht 4 besteht aus FEP 8, welches ein PTFE-Derivat 9 ist. FEP 8 ist das Kurzzeichen für Tetrafluorethylen-Hexafluorpropylen-Copolymer. Die zweite Schicht 4 dient als Schutzschicht für die Oberfläche der ersten Schicht 3. Hierfür hat sich FEP 8 als besonders vorteilhaft erwiesen. Zum einen lenkt eine dünne Schicht FEP 8 einfallendes Licht, insbesondere im Nahinfrarot-Bereich, kaum um und absorbiert dieses im Wesentlichen nicht. Daher bleiben die optischen Eigenschaften der ersten Schicht 3 trotz der Beschichtung mit der zweiten Schicht 4 im Wesentlichen unverändert. Zusätzlich ist FEP 8 undurchdringlich für Öl und Fett und mechanisch robuster als PTFE 7.

Die erste Schicht 3 weist eine Schichtdicke von mindestens 2 mm auf. Hierdurch wird ein Durchscheinen des Lichts durch die erste Schicht 3 vermieden. Als besonders vorteilhaft hat sich eine Schichtdicke der ersten Schicht 3 im Bereich von 4 mm bis 6 mm, weiter vorzugsweise eine Schichtdicke von 5 mm erwiesen.

Die zweite Schicht 4 weist eine Schichtdicke von mindestens 10 µm bis maximal 100 µm, vorzugsweise eine Schichtdicke im Bereich von 40 µm bis 60 µm, weiter vorzugsweise eine Schichtdicke von 50 µm auf. Ab einer Schichtdicke von 10 µm hat sich gezeigt, dass die zweite Schicht 4 die erste Schicht 3 wirksam gegen mechanische Belastungen schützt. Bei einer Schichtdicke von mehr als 100 µm nimmt die Transparenz der zweiten Schicht 4 ab, sodass die optischen Eigenschaften des Weißstandards 1 negativ beeinflusst werden, da FEP 8 lediglich eine Schutzschicht darstellt und die optischen Eigenschaften von PTFE 7 bei der Verwendung als Weißstandard 1 genutzt werden.

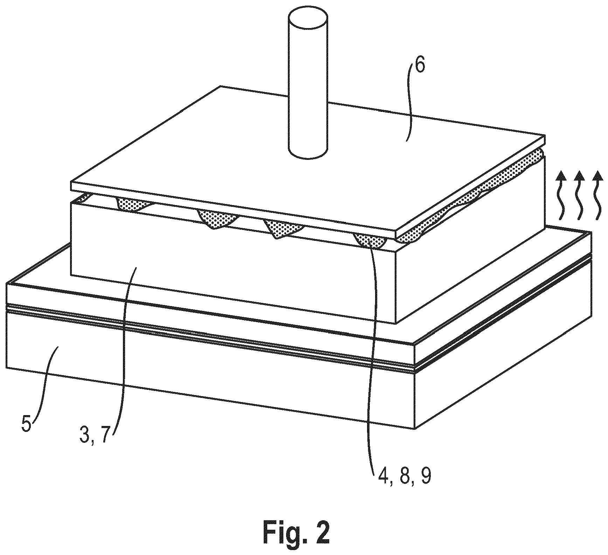

Hier und vorzugsweise ist die zweite Schicht 4 mit der ersten Schicht 3 verschweißt. Dieses Fügeverfahren ist anwendbar, weil der Schmelzpunkt von FEP 8 unterhalb des Schmelzpunktes von PTFE 7 liegt. Zum Fügen der Schichten 3, 4 haben sich drei Varianten als besonders vorteilhaft erwiesen, die nachfolgend anhand der Fig. 2 - 4 näher erläutert werden.

Gemäß der in Fig. 2 dargestellten ersten Variante, werden zunächst die erste Schicht 3 und die zweite Schicht 4 aufeinandergeschichtet und im ersten Schritt mit Druck beaufschlagt, sodass die zweite Schicht 4 gegen die erste Schicht 3 gepresst wird. Besonders bevorzugt werden zum Druckbeaufschlagen die beiden Schichten 3, 4 mit einem Gewicht 6 belastet, wobei das Gewicht 6 eine polare Oberfläche aufweist. Polare Oberflächen wirken auf PTFE 7 und das PTFE-Derivat 9 abstoßend, sodass das Gewicht 6 leicht entfernbar ist. Das Gewicht 6 kann beispielsweise eine Oberfläche aus Stahl, Eisen, Aluminium oder Keramik aufweisen. In einem zweiten Schritt wird die erste Schicht 3 mittels eines Heizelements 5 unmittelbar erhitzt. Das Heizelement 5 kann beispielsweise eine Wärmeplatte sein. Ausgehend von der ersten Schicht 3 wird Wärmeenergie an die zweite Schicht 4 übertragen. Hierbei erwärmt sich das Teflon-Derivat 9 und wird unter dem Anpressdruck verfestigt. In einem dritten Schritt werden die durch das Gewicht 6 mit Druck beaufschlagten Schichten 3, 4 abgekühlt. Die Verfahrensschritte werden in chronologische Reihenfolge ausgeführt.

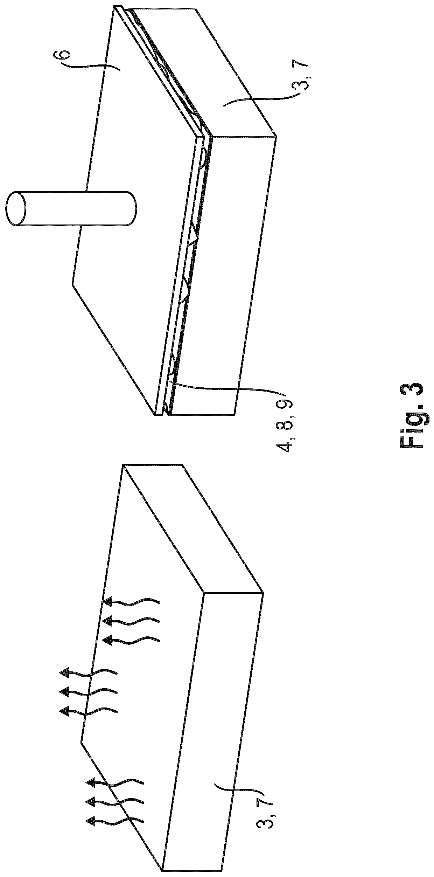

In Fig. 3 ist eine zweite Variante zum Fügen der Schichten 3, 4 dargestellt. Gemäß der in Fig. 3 gezeigten Variante wird zunächst die erste Schicht 3 in einem hier nicht dargestellten Ofen erhitzt. In einem zweiten Schritt wird die zweite Schicht 4 auf die erhitzte erste Schicht 3 geschichtet und mittels eines Gewichts 6 analog zu der oben beschrieben und in Fig. 2 dargestellten ersten Variante belastet. Hierbei erwärmt sich das Teflon-Derivat 9 und wird unter dem Anpressdruck verfestigt. In einem dritten Schritt werden die durch das Gewicht 6 mit Druck beaufschlagten Schichten 3, 4 abgekühlt. Die Verfahrensschritte werden in chronologische Reihenfolge ausgeführt.

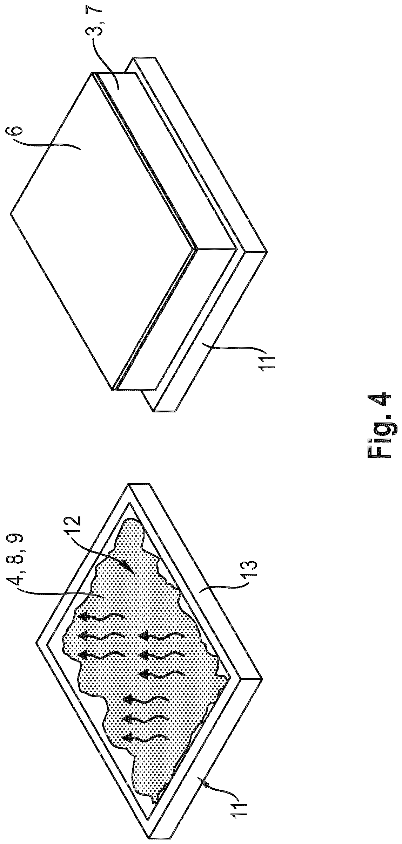

In Fig. 4 ist eine dritte Variante zum Fügen der Schichten 3, 4 dargestellt. Im Gegensatz zu der zweiten Variante wird bei dieser dritten Variante die zweite Schicht 4 in einem Ofen erhitzt. Hierfür wir die zweite Schicht 4 vor dem Erhitzen in eine Form 11 gegeben, welche eine ebene Grundfläche 12 mit seitlich begrenzenden Rändern 13 aufweist. Auf die erhitzte zweite Schicht 4 wird im zweiten Schritt die erste Schicht 3 geschichtet und mit Druck durch ein oben bereits näher beschriebenes Gewicht 6 beaufschlagt. Hierbei gibt das erwärmte Teflon-Derivat 9 in einem dritten Schritt Wärmeenergie an die erste Schicht 3 ab und wird unter dem Anpressdruck verfestigt. Die Verfahrensschritte werden in chronologische Reihenfolge ausgeführt.

In allen drei vorstehend beschrieben Varianten kann die erste oder die zweite Schicht 3, 4 auf eine Temperatur erhitzt werden, die mindestens der Schmelztemperatur von dem PTFE-Derivat 9 entspricht und geringer als die Schmelztemperatur von PTFE 7 ist. Bei allen drei Varianten erreicht die zweite Schicht 4, bzw. das PTFE-Derivat 9 durch Erwärmen einen verstärkt elastischen Zustand oder einen viskosen Zustand. Die Druckbeaufschlagung sorgt zusätzlich dafür, dass sich das PTFE-Derivat 9 in den Poren des PTFEs 7 festsetzt.

Fig. 1 zeigt eine Seitenansicht mit bereichsweiser Schnittdarstellung einer als selbstfahrender Feldhäcksler 14 ausgeführten selbstfahrenden Erntemaschine 15. Der Feldhäcksler 14 weist ein Vorsatzgerät 16 zur Aufnahme von Erntegut 17, eine Häckseleinheit 18, welche das aufgenommene Erntegut 17 zerkleinert und einen Auswurfkrümmer 19 zum Überladen des zerkleinerten Ernteguts 17 auf ein Transportfahrzeug auf. Der grundsätzliche Aufbau eines Feldhäckslers 14 ist aus dem Stand der Technik hinreichend bekannt und wird hier nicht näher beschrieben. An dem Auswurfkrümmer 19 befindet sich eine Messvorrichtung 20 zur Analyse des durch den Auswurfkrümmer 19 geförderten Ernteguts 17. Die an sich bekannte Messvorrichtung 20 dient zur Bestimmung bestimmter Inhaltsstoffe des Ernteguts 17. Hinsichtlich der näheren Bestimmung der Inhaltsstoffe und den Aufbau der Messvorrichtung 20 wird auf die DE 10 2006 035 906 verwiesen, deren Lehre mit Verweis auf diese in diese Offenbarung integriert ist. Zur Kalibrierung der Messvorrichtung 20 wird ein Weißstandard 1 verwendet. Erfindungsgemäß ist der verwendete Weißstandard 1 gemäß der vorstehenden Beschreibung von den zwei Schichten 3, 4 gebildet. Ein derartiger Weißstandard 1 ist besonders vorteilhaft zur Verwendung in einer Messvorrichtung 20 einer selbstfahrenden Erntemaschine 15 geeignet, zumal dieser eine besonders robuste und schmutzresistente Oberfläche aufweist.

### Bezugszeichenliste:

- 1: Weißstandard
- 2: Referenzstandard
- 3: Erste Schicht
- 4: Zweite Schicht
- 5: Heizelement
- 6: Gewicht
- 7: PTFE
- 8: FEP
- 9: PTFE-Derivat
- 10: Heizelement
- 11: Form
- 12: Grundfläche
- 13: Rand
- 14: Feldhäcksler
- 15: Erntemaschine
- 16: Vorsatzgerät
- 17: Erntegut
- 18: Häckseleinheit
- 19: Auswurfkrümmer
- 20: Messvorrichtung

## Patentansprüche

1. Optischer Referenzstandard (2) zumindest eine erste Schicht (3) umfassend, die PTFE (7) enthält,
**dadurch gekennzeichnet, dass**
der optische Referenzstandard (2) eine zweite Schicht (4) umfasst, die ein PTFE-Derivat (9) enthält und zumindest abschnittsweise die erste Schicht (3) bedeckt.

2. Optischer Referenzstandard (2) nach Anspruch 1, **dadurch gekennzeichnet, dass** die erste Schicht (3) aus PTFE (7), insbesondere Polytetrafluorethylen, besteht und das PTFE-Derivat (9) als FEP (8), insbesondere Tetrafluorethylen-Hexafluorpropylen-Copolymer, ausgebildet ist und die zweite Schicht (4) aus FEP (8) besteht.

3. Optischer Referenzstandard (2) nach einem der Ansprüche 1 oder 2, **dadurch gekennzeichnet, dass** das PTFE (7) gesintertes PTFE (7) ist.

4. Optischer Referenzstandard (2) nach einem der Ansprüche 1 bis 3, **dadurch gekennzeichnet, dass** die erste Schicht (3) eine Schichtdicke von mindestens 2 mm aufweist, vorzugsweise eine Schichtdicke im Bereich von 4 mm bis 6 mm aufweist.

5. Optischer Referenzstandard (2) nach einem der Ansprüche 1 bis 4, **dadurch gekennzeichnet, dass** die zweite Schicht (4) eine Schichtdicke im Bereich von mindestens 10 µm bis maximal 100 µm, vorzugsweise eine Schichtdicke im Bereich von 40 µm bis 60 µm, aufweist.

6. Verfahren zur Herstellung eines optischen Referenzstandards (2), welcher zumindest eine erste Schicht (3) umfasst, die PTFE (7) enthält,
**dadurch gekennzeichnet, dass** eine zweite Schicht (4) auf die erste Schicht (3) aufgebracht wird, die ein PTFE-Derivat (9) enthält.

7. Verfahren nach Anspruch 6, **dadurch gekennzeichnet, dass** der optische Referenzstandard (2) gemäß einem der Ansprüche 1 bis 5 ausgebildet ist.

8. Verfahren nach einem der Ansprüche 6 oder 7, **dadurch gekennzeichnet, dass** in einem ersten Schritt die erste und zweiten Schicht (3, 4) aufeinandergeschichtet und mit Druck beaufschlagt werden,
wobei in einem zweiten Schritt ein Heizelement (5) die erste Schicht (3), vorzugsweise unmittelbar erhitzt.

9. Verfahren nach einem der Ansprüche 6 bis 7, **dadurch gekennzeichnet, dass** in einem ersten Schritt die erste oder die zweite Schicht (3, 4) erhitzt wird, wobei vorzugsweise die erste oder die zweite Schicht (3, 4) mittels eines Ofens erhitzt wird,
wobei im zweiten Schritt die Schichten (3, 4) aufeinandergeschichtet und mit Druck beaufschlagt werden.

10. Verfahren nach einem der Ansprüche 8 bis 9, **dadurch gekennzeichnet, dass** die erste oder die zweite Schicht (3, 4) auf eine Temperatur erhitzt wird, die mindestens der Schmelztemperatur von dem PTFE-Derivat (9) entspricht und geringer als die Schmelztemperatur von PTFE (7) ist.

11. Verfahren nach einem der Ansprüche 8 bis 10, **dadurch gekennzeichnet, dass** in einem dritten Schritt die unter Druck stehenden Schichten (3, 4) abgekühlt werden.

12. Verwendung eines optischen Referenzstandards (2) in einer Messvorrichtung (20) einer selbstfahrenden Erntemaschine (15), **dadurch gekennzeichnet, dass** der optische Referenzstandard (2) gemäß einem der Ansprüche 1 bis 5 ausgebildet ist.
